# EUROPEAN PATENT SPECIFICATION

(11) **EP 0 525 272 B1**
(45) Date of publication and mention of the grant of the patent: **28.02.1996**
(21) Application number: 91500086.3
(22) Date of filing: 31.07.1991
(51) Int. Cl.: C01B 39/00, B01F 3/08, B01F 5/04

(54) **Procedure and device for obtaining zeolite 4A**
Verfahren und Vorrichtung zur Herstellung von Zeolith 4A
Procédé et appareil pour obtenir une zéolithe 4A

(43) Date of publication of application: 03.02.1993
(73) Proprietor: FORET, S.A., E-08008 Barcelona (ES)
(72) Inventor: Artigas Puerto, Ramón, E-08014 Barcelona (ES); Forner Benito, Juan, E-08018 Barcelona (ES)
(74) Representative: Alonso Langle, Emilio Juan

(56) References cited:
- EP-A- 0 128 766
- DD-A- 148 625
- DE-B- 2 824 342

## Description

### Subject of the Invention

The subject of this invention is a process and device for obtaining crystallographically pure ZEOLITE 4A with optimal dimension and distribution of particle size for application in clothes-washing detergents, all based on an amorphous alkaline silicoaluminate gel which is stable below 75°C.

### Background to the Invention

Existing technology for obtaining ZEOLITE 4A suffers from a variety of drawbacks; great difficulty in preparing a stable intermediate gel from which to obtain the ZEOLITE 4A by continuous crystallisation, the generation of Zeolite C, an autocatalytic byproduct which is thermodynamically more stable and which leads to a gradual reduction of ZEOLITE 4A yield, and the difficulty in controlling the product grain size.

These disadvantages are avoided by using a reactor (gelifier) specifically designed for this purpose.

It has also been shown that the composition of the reaction mixture is not as critical as stated in methods known until now. Operating with this system, a stable gel is obtained, the formation of autocatalytic byproducts is avoided and it is possible to control the dimension and distribution of crystal size.

The process arising from the invention is flexible, economic and non-pollutant.

### The State of the Art

In some previous patents - BE 840315, I 19617/79, USA 33/0373, among others - Zeolite 4A is obtained from a discontinuously prepared gel whose instability requires a maturing period prior to crystallisation. The duration of this period depends on the type of silicate used but in all cases excessively lengthens the operation. The fact that the gel is obtained discontinuously causes variations in the quality of the end product.

In continuous gel preparation, referred to in patents US 266/334 and GB 1601040, particle size depends on the chemical composition of the reaction. In addition, GB 1601040 mentions the need to recirculate gel to dilute at least part of one of the reaction dissolutions. Recirculation of mixes in gelification phase causes encrustation and blocking of pipes, valves and recirculation pumps, and premature wear of mechanical elements subjected to high peripheral speeds due to the high level of friction with the gel.

### Description of the Invention

Zeolite 4A is obtained by the crystallisation of an amorphous alkaline silicoaluminate gel. The gel is prepared by continuously mixing an alkaline dissolution of SiO₂ with an alkaline Al₂0₃ dissolution in a reactor (gelifier) especially designed to obtain a suitable degree of homogenisation and gel formation time in order to obtain Zeolite 4A with the required average size.

The gelifier consists of a thermostatted cylindrical tank of small size and useful volume which is adjusted by means of a vertically movable overflow pipe, said tank being provided of, a tube with a nozzle at its bottom end, a nozzle connected tangentially to the side close to the bottom, and an adjustable-angle current breaker.

Through the tangential input, with an adjustable-pressure pump, an alkaline aluminium dissolution is injected at a temperature which is adjustable between 30 and 85°C, and which reacts with an alkaline SiO₂ dissolution entering by means of an adjustable-pressure pump through the nozzle and radially dispersed in the tank when it collides with a disc located opposite its output, in the mid plane of the tangential input, directly obtaining the gel without recirculation and/or dilution or the incorporation of moving parts into the system.

Our invention enables Zeolite 4A to be prepared with the required average size by varying the gelifier operating conditions irrespective of the chemical composition of the gel which only determines the product's Ca²⁺ absorption capacity. It also means that gel can be obtained with identical physical/chemical properties from alkaline SiO₂ dissolutions of molar reaction SiO₂/Na₂0 between 2.0 and 3.5.

Crystallisation takes place at 90-100°C (preferably 98±2) in a tank (crystalliser) with gentle agitation. The crystallisation stage lasts 30-90 minutes, depending on the reaction composition and operating conditions.

The alkaline SiO₂ and Na₂0 dissolutions are prepared in their respective digestors by attack from raw materials of silica and alumina trihydrate with NaOH. The gel contains 0.30 to 0.80 (preferably 0.40 to 0.60 and especially 0.47) moles of SiO₂ and 0.15 to 0.45 (preferably 0.35 to 0.20, especially 0.26) moles of Al₂0₃ per mol of Na₂ 0 and 94 to 97 (Preferably 94 to 95) molar percentage of H₂0.

The product obtained has no crystalline pollutants (X-ray difractometry) and the required mean particle size can be obtained between 2 and 5 microns (Coulter-counter). Calcium absorption per gram of anhydride product in optimal conditions is 345 mg of CaC0₃ and, within the normal operating margin, never less than 330. The product is stable in contact with its liquors at temperatures below 75°C.

The liquors are recycled to the alumina digestor for preparation of the alkaline aluminium dissolution. The purified washing water is recycled to the SiO₂ digestor following precipitation and separation of the aluminium with SiO₂ dissolution. The process does not generate byproducts and guarantees a 98% yield in operating conditions.

### Description of the Drawings

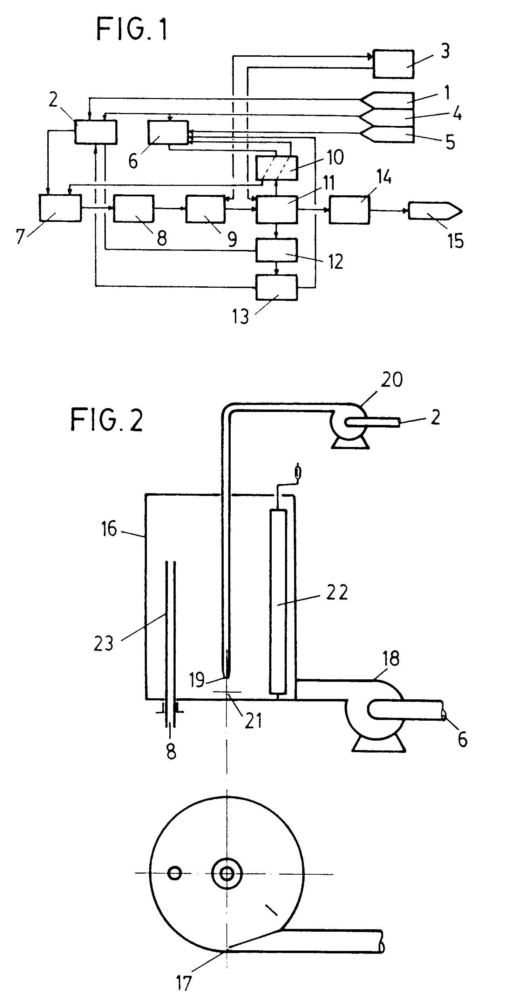

Figure 1 shows a diagram developing the process according to an operative scheme: figure 2 shows a diagram of the device making up the gelifier.

According to figure 1, the raw materials for the process are SiO₂ (SILO 1), Al₂0₃.3H₂0 (SILO 5), NaOH 50 (VESSEL 4) and desmineralised water (VESSEL 3). The SiO₂ alkaline dissolution is prepared in DIGESTOR 2; that of Al₂0₃ in DIGESTOR 6. Both dissolutions react in GELIFIER 7 to form an amorphous gel which is transferred to CRYSTALLISER 8. At the end of crystallisation, the zeolitic suspension is cooled and concentrated at 9 and sent to FILTER 11. The liquors, preheated in the HEAT EXCHANGER 10, are recycled to DIGESTOR 6. The product (Zeolite 4A) is washed with desmineralised water sent to the DRYER 14 and from there to the DISPATCH SILO 15.

The washing waters are treated in the PURIFIER 12 with an SiO₂ dissolution from DIGESTOR 2. The precipitate (sodium silico-aluminate) separated in FILTER 13 is recycled to DIGESTOR 6: the Al-free filtered product goes to DIGESTOR 2.

According to figure 2, the gelifier is made up of a small thermostatted, 16, to which the alkaline aluminium dissolution from reactor 6 is delivered by an adjustable-pressure pump through the nozzle 17. The alkaline silica dissolution from reactor 2 is delivered by an adjustable-pressure pump 20 through the nozzle 19. The alkaline SiO₂ dissolution collides with the disc 21 and is dispersed radially in the cyclonic flow of the incoming Al₂O₃ forming a perfectly homogeneous mixture. The cyclonic flow is altered as required according to the alignment of the current breaker 22. The useful volume of the tank 16 is altered by moving the overflow pipe 23 up or down, and through which the gel enters the operative plan (figure 1) at the crystallisation stage 8.

### Preferential Design

### Example 1:

The tangential gelifier nozzle is fed continuously with aluminium dissolution at the same time as alkaline SiO₂ dissolution of molar reaction 2.0 is fed through the coaxial input of the gelifier, so that the resulting reaction molar composition is:

94% H₂O, SiO₂/Na₂O = 0.47; Al₂O₃/Na₂O = 0.26

The gel obtained is transferred to a crystalliser, and gently agitated while its temperature is raised to 98 ±2°C in 50 minutes. Crystallisation is completed after 60 minutes and it is rapidly cooled to 75°C, filtered, washed and dried.

The results obtained are summarised on table 1.

As can be seen from the table, the grain size can be controlled as required by adjusting the operative conditions of the gelifer; reaction temperature, nozzle input pressure, useful gelifier volume and current breaker alignment. With the appropriate combination of these factors, it is possible to obtain the desired grain size both in terms of mean size and distribution, without changing the product's absorption capacity.

### Example 2:

With a reaction composition of:
94% H₂O, SiO₂/Na₂O = 0.55; Al₂O₃/Na₂O = 0.30 prepared with an alkaline SiO₂ dissolution of molar ratio 2.0, the results shown on table II are obtained.

### Example 3:

With a reaction composition of:
94% H₂O, SiO₂/Na₂O = 0.42; Al₂O₃/Na₂O = 0.23 prepared with an alkaline SiO₂ dissolution of molar ratio 2.0, the results shown on table III are obtained.

### Example 4:

With a reaction composition of:
94% H₂O, SiO₂/Na₂O = 0.60; Al₂O₃/Na₂O = 0.33 prepared with an alkaline SiO₂ dissolution of molar ratio 2.0, the results shown on table IV are obtained.

### Example 5:

With the same composition as in Example 1, but using an alkaline SiO₂ dissolution of molar ratio 2.5, the same results are obtained as in example I, showing that the gelifier makes it possible to prepare gel of identical physical/chemical properties even though with a different silicate raw material.

### Example 6:

With the same composition as in Example 1, but using an alkaline SiO₂ dissolution of molar ratio 3.5, the same results are obtained as in example I, showing that the gelifier makes it possible to prepare gel of identical physical/chemical properties even though with a different silicate raw material.

**TABLA I**

| **TRIAL** | **REACTIVE TEMPERATURE ªC** | **NOZZLE PRESSURE Kg/cm** | **USEFUL VOLUME %** | **CURRENT- BREAKER ALIGNMENT º SEX** | **PARTICLE SIZE µ** | **CA ++ ABSORPTION mg CaCo₃/g** |
|---|---|---|---|---|---|---|
| 1 | 50 | 2 | 100 | 0 | 5 | 338 |
| 2 | 70 | 2 | 100 | 0 | 4 | 340 |
| 3 | 70 | 4 | 100 | 0 | 3,6 | 339 |
| 4 | 70 | 6 | 100 | 0 | 3,3, | 341 |
| 5 | 70 | 6 | 50 | 0 | 2,7 | 340 |
| 6 | 70 | 6 | 25 | 0 | 2,4 | 341 |
| 7 | 70 | 6 | 10 | 0 | 2,2 | 345 |
| 8 | 70 | 6 | 10 | 45 | 2,1 | 340 |
| 9 | 70 | 6 | 10 | 90 | 2,0 | 344 |

**TABLA II**

| **TRIAL** | **REACTIVE TEMPERATURE ªC** | **NOZZLE PRESSURE Kg/cm** | **USEFUL VOLUME %** | **CURRENT- BREAKER ALIGNMENT º SEX** | **PARTICLE SIZE µ** | **CA ++ ABSORPTION mg CaCo₃/g** |
|---|---|---|---|---|---|---|
| 1 | 50 | 2 | 100 | 0 | 5 | 328 |
| 2 | 70 | 2 | 100 | 0 | 4 | 330 |
| 3 | 70 | 4 | 100 | 0 | 3,6 | 331 |
| 4 | 70 | 6 | 100 | 0 | 3,3 | 332 |
| 5 | 70 | 6 | 50 | 0 | 2,7 | 335 |
| 6 | 70 | 6 | 25 | 0 | 2,4 | 333 |
| 7 | 70 | 6 | 10 | 0 | 2,2 | 332 |
| 8 | 70 | 6 | 10 | 45 | 2,1 | 335 |
| 9 | 70 | 6 | 10 | 90 | 2.0 | 331 |

**TABLA III**

| **TRIAL** | **REACTIVE TEMPERATURE ªC** | **NOZZLE PRESSURE Kg/cm** | **USEFUL VOLUME %** | **CURRENT- BREAKER ALIGNMENT º SEX** | **PARTICLE SIZE µ** | **CA ++ ABSORPTION mg CaCo₃/g** |
|---|---|---|---|---|---|---|
| 1 | 50 | 2 | 100 | 0 | 5 | 337 |
| 2 | 70 | 2 | 100 | 0 | 4 | 339 |
| 3 | 70 | 4 | 100 | 0 | 3,6 | 342 |
| 4 | 70 | 6 | 100 | 0 | 3,3 | 336 |
| 5 | 70 | 6 | 50 | 0 | 2,7 | 341 |
| 6 | 70 | 6 | 25 | 0 | 2,4 | 338 |
| 7 | 70 | 6 | 10 | 0 | 2,2 | 337 |
| 8 | 70 | 6 | 10 | 45 | 2,1 | 340 |
| 9 | 70 | 6 | 10 | 90 | 2.0 | 340 |

**TABLA IV**

| **TRIAL** | **REACTIVE TEMPERATURE ªC** | **NOZZLE PRESSURE Kg/cm** | **USEFUL VOLUME %** | **CURRENT- BREAKER ALIGNMENT º SEX** | **PARTICLE SIZE µ** | **CA ++ ABSORPTION mg CaCo₃/g** |
|---|---|---|---|---|---|---|
| 1 | 50 | 2 | 100 | 0 | 5 | 324 |
| 2 | 70 | 2 | 100 | 0 | 4 | 326 |
| 3 | 70 | 4 | 100 | 0 | 3,6 | 327 |
| 4 | 70 | 6 | 100 | 0 | 3,3 | 324 |
| 5 | 70 | 6 | 50 | 0 | 2,7 | 328 |
| 6 | 70 | 6 | 25 | 0 | 2,4 | 328 |
| 7 | 70 | 6 | 10 | 0 | 2,2 | 325 |
| 8 | 70 | 6 | 10 | 45 | 2,1 | 325 |
| 9 | 70 | 6 | 10 | 90 | 2,0 | 326 |

## Claims

1. A device for obtaining zeolite 4A consisting of a gelifier wherein two alkaline solutions are mixed to obtain a gel from which the zeolite is produced, said gelifier consisting of a thermostatted cylindrical tank, whose useful volume can be adjusted by a vertically movable overflow pipe, said tank being provided with a tube having a nozzle at its bottom end to feed the SiO2 solution delivered by an adjustable-pressure pump and dispersed radially on a disc located in the mid plane of a second nozzle which is tangentially connected to the side of the tank close to the bottom, through which by means of an adjustable-pressure pump an alkaline Al2O3 solution is fed and which follows a cyclonic trajectory which is adjustable by means of a variable angle current breaker to give a homogeneous gel when mixed with the ratio flow of the alkaline SiO₂ solution.

2. Process for obtaining zeolite 4A consisting of the crystallisation in stages of an amorphous alkaline silico-aluminate gel, continously prepared by hot mixing of an alkaline SiO₂ solution having a SiO₂/Na₂O molar ratio between 2.0 and 3.5, with an alkaline Al₂O₃ solution in a gelifier reactor, cooling and concentrating of the resulting mixtures, said cooling being performed with recirculation of liquors and washing waters which, once purified, are reused respectively in the dissolution of the Al₂O₃ and SiO₂ sources, crystallisation being carried out at temperature between 90 and 100°C in a crystalliser with gentle agitation for 30-90 minutes and said process leading to particles with mean grain size between 2 and 5 microns depending on the gelifier operating conditions.

3. A process as set forth in claim 2, wherein the gel is prepared continuously, without recirculation and/or dilution.

4. A process as set forth in claims 2 and 3, wherein the grain size, between 2 and 5 microns, is determined by modifying the mixture temperature, nozzle input pressure, useful gelifier volume and the alignment of the current breaker, and/or a combination of all said variables.

## Patentansprüche

1. Ein Vorrichtung zur Herstellung von Zeolite 4A, bestehend aus einem Gelerzeuger, in dem zwei alkalische Lösungen gemischt werden, um ein Gel zu erhalten, aus welchem das Zeolite hergestellt wird; besagter Gelerzeuger bestehend aus einem wärmegedämmten zylindrischen Tank, dessen nutzbares Volumen durch einen vertikal verschiebbaren Überfluß eingestellt werden kann, besagter Tank am Boden durch ein mit einem Ventil versehenes Rohr gespeist zur Versorgung mit der SiO2-Lösung, welche durch eine regulierbare Druckpumpe zugeführt und radial auf einer Scheibe verteilt wird, plaziert in der mittleren Ebene eines zweiten Ventils, welches in der Nähe des Bodens tangential mit der Tankseite verbunden ist, durch welches über eine regulierbare Druckpumpe eine alkalische Al2O3-Lösung zugeführt wird, die einer Kreisbahn folgt, welche mittels eines variablen Winkels zur Strömungsbrechung eingestellt wird, um beim Mischen mit dem genau dosierten Zufluß von alkalischer SiO2-Lösung ein homogenes Gel zu ergeben.

2. Prozeß zur Herstellung von Zeolite 4A, bestehend aus der abschnittsweisen Kristallisierung von amorphem alkalischem Silikon-Aluminium-Gel, kontinuierlich zubereitet mittels Heißmischens einer alkalischen SiO2-Lösung unter einem Molverhältnis von SiO2/Na2O zwischen 2,0 und 3,5 mit einer alkalischen SiO2-Lösung in einem Gelerzeugungsreaktor, darauf folgender Abkühlung und Aufkonzentration des erhaltenen Gemisches, wobei besagte Abkühlung mittels der Rezirkulation von Flüssigkeiten und Spülwassern durchgeführt wird, welche, einmal gereinigt, wiederverwendet beziehungsweise in der Al2O3- und SiO2-Lösung benutzt werden; die Kristallisierung läuft bei einer Temperatur von zwischen 90 und 100°C in einem Kristallisierer mit sanfter Bewegung 30-90 Minuten lang ab, wobei besagter Prozeß Teilchen erzeugt mit einer Hauptkorngröße zwischen 2 und 5 Micron, abhängig von den Betriebsbedingungen des Gelerzeugers.

3. Verfahren nach Anspruch 2, dadurch gekennzeichnet, dass das Gel kontinuierlich vorbereitet wird, ohne rezirkulation und/oder Verdünnung.

4. Ein Prozeß wie im übrigen in den Abschnitten 2 und 3 beschrieben, in dem die Korngröße von zwischen 2 und 5 Micron durch eine Veränderung der Mischungstemperatur, den am Ventil herrschenden Druck, das nutzbare Gelerzeugervolumen und die Anordnung der Strömungsbrecher, und/oder eine Kombination der erwähnten Einflußgrößen bestimmt wird.

## Revendications

1. Invention pour obtenir de la zéolithe 4A, consistant en un gélificateur - dans lequel deux solutions alcalines sont mélangées pour obtenir un gel à partir duquel on produit la zéolithe, - dit gélificateur consistant en un réservoir cylindrique à thermostat, dont le volume utile peut être réglé par un tuyau de trop-plein se déplaçant verticalement, dit réservoir fourni avec un tube possédant un embout à sa partie inférieure pour faire passer la solution de SiO₂ libérée par une pompe à pression réglable et qui se propage en rayon sur un disque placé en milieu de plan d'un second embout, tangentiellement branché sur le côté du réservoir à côté de la partie inférieure, - à travers duquel grâce à une pompe à pression réglable passe la solution alcaline de Al₂O₃ et suit une trajectoire cyclonique, réglable grâce à un concasseur courant à angle variable pour donner un gel homogène une fois mélangée au flux proportionnel de la solution alcaline de SiO₂.

2. Procédé pour obtenir de la zéolithe 4A consistant en la cristallisation par paliers d'un gel alcalin amorphe de silicoaluminate, préparé en permanence par le mixage à chaud d'une solution alcaline SiO₂, ayant une proportion molaire SiO₂/Na₂O₃ entre 2.0 et 3.5, avec une solution alcaline Al₂O₃ dans un réacteur gélificateur, en le refroidissement et la concentration des mélanges résultants dit refroidissement en cours avec recirculation des solutions et des eaux de lavage qui, une fois purifiées, sont respectivement réutilisées dans la dissolution des sources de Al₂O₃ et de SiO₂, la cristallisation s'effectuant à une température entre 90° et 100° C, dans un cristallisoir avec une agitation faible pendant 30-90 minutes et dit procédé menant aux particules avec une taille moyenne de grain variant entre entre 2 et 5 microns en fonction des conditions de fonctionnement du gélificateur.

3. Procédé selon la revendication 2, dans lequel le gel est préparé de façon continue sans recirculation et/ou dilution.

4. Procédé installé comme dans les réclamations 2 et 3, où la taille du grain entre 2 et 5 microns, est déterminée par la modification de la température de mixage, la pression introduite dans l'embout, le volume utile du gélifiant et l'alignement du broyeur courant et/ou la combinaison de toutes ces variantes.
